# EUROPEAN PATENT APPLICATION

(11) **EP 1 607 330 A1**
(43) Date of publication of application: **21.12.2005**
(21) Application number: 05253448.4
(22) Date of filing: 04.06.2005
(51) Int. Cl.: B64D 27/26

(54) **Load reduced engine mount**

(30) Priority: 14.06.2004 GB 0413276
(71) Applicant: ROLLS-ROYCE PLC, London, SW1E 6AT (GB)
(72) Inventor: Rose, Andrew John, Hanham Bristol BS15 3LB (GB); Stowell, Christopher James, Wotton-under-Edge, GL GL12 8SF (GB); Fitzgerald, John, 411 02 Goteborg (SE)
(74) Representative: Bird, Vivian John

(57) **Abstract**

An engine mount for a gas turbine comprises a first compliant structure (4) having a range of compliant movement governed by a first stiffness value. The mount further comprises stiffening means (42,44,48,50) which act upon the compliant structure through part of the range of compliant movement such that the mount has at least two modes of operation, a first mode governed only by the first stiffness value of the compliant structure, and a second mode governed by both the first stiffness value and the stiffening means.

## Description

The present invention relates to gas turbine engine mounts, and particularly to gas turbine engine mounts for attachment of said engines to airframes.

In its most basic form, the gas turbine engine comprises a compressor coupled to a turbine, and a combustor located therebetween. In operation, the compressor compresses the working fluid which is then heated by the combustor. The turbine then extracts sufficient energy from the fluid to power the compressor. In the case of a direct thrust engine, the remaining useful energy of the fluid is then used to accelerate the fluid as it exits the turbine and produce thrust. In the case of an indirect thrust engine, the remaining useful energy is extracted via a further turbine, called the power turbine, and used to drive a propeller or a rotor.

Aircraft gas turbine engines are attached to their associated airframe by a number of mounts. These transmit engine loads, such as torque and thrust, to the airframe. Where the loads imposed by the engine on the airframe are not steady state and have an oscillating component they give rise to fatigue. Because the fatigue strength of materials is less than their ultimate strength, oscillating loads require stronger, heavier structures. Preferably then, the engine mounts isolate the airframe from oscillating loads, and transmit only steady state loads to the airframe.

Design of engine mounts is complicated by the need to consider the engine loads imposed by engine failure. One particular example of such a case is that of 'blade off'; where axial flow compressors or turbines are used in the gas turbine, the rotative machinery comprises bladed discs that rotate at extremely high speeds. Although extremely unusual, such compressors and turbines can shed blades when the attachment between a blade and the disc fails. The resultant loss of mass from the rotating component causes a large out of balance load, which applies large oscillating loads to the platform in which the engine is mounted. These loads increase proportional to the square of the rotating speed. They increase further where departure of the blade instigates the loss of further blades.

In the case of an engine mount according to the prior art, a flexible structure is provided between engine and airframe, which can accommodate oscillating loads during normal operation of the gas turbine engine. Such a structure is well known in the art as a load bearing spring link mount.

The load bearing spring link mount comprises an engine attachment point located, at the mid-span of a flexible first beam, and an aircraft attachment point located at the mid-span of a flexible second beam. The first and second beam are joined together at their first and second ends by respective first and second elements such that a vertical clearance exists between the first and second beams. Located at the mid-span of the second beam is a bolt, which projects through a hole in the first beam, sized to allow relative movement therebetween. The head of the bolt has a vertical clearance gap between the upper surface of the first beam such that the bolt head engages the second beam when the two are moved apart a predetermined distance.

The clearance gap between first and second beams allows the spring link to accommodate a predetermined amount of vertical compression before the beams touch and the link becomes rigid. Similarly, the vertical clearance between the upper surface of the first beam and the bolt head allows the spring link to accommodate a predetermined amount of vertical extension before the bolt engages the first beam and renders the link rigid. In this way, the range of movement of the link is controlled and the range of movement of engine relative to the airframe. This is an important consideration during normal operation of the gas turbine engine, where it is important that the engine stays close to its installed position.

In the blade off case however, the amplitude of oscillation of the engine is much larger than during normal operation. With a link optimised for normal operation, the range of movement of the link is insufficient, and as the link is alternately compressed and stretched, the extremes of each motion exceed the available displacement and the mount is rendered effectively rigid. This causes the engine loads to be imparted directly into the airframe.

A number of approaches have been taken to avoid this problem. One approach is to reject flexible mounts in favour of solid mounts sized for the worst-case blade-off condition, and suitably reinforce the airframe. Another approach has been to design the engine mounts to fail during blade-off, with a secondary mounts, known as 'catchers', to allow the engine a greater degree of movement.

Both approaches increase the weight of the aircraft, because of the reinforcement necessary to carry the full load or because of the secondary mounts. Furthermore, the first approach increases the amount of vibration passed to the airframe, while the second approach increases the volume of the engine installation.

What is needed then is an engine mount which can absorb engine vibration during normal engine operation, but which does not top out and impart the full loads into the airframe when the engine fail through blade-off, or other failure modes.

According to the present invention there is provided an engine mount for a gas turbine comprising a first compliant structure having a range of compliant movement governed by a first stiffness value, further comprising stiffening means which act upon the compliant structure through part of the range of compliant movement such that the mount has at least two modes of operation, a first mode governed only by the first stiffness value of the compliant structure, and a second mode governed by both the first stiffness value and the stiffening means.

Preferably, the compliant structure is compliant under compression and under tension, and the stiffening means comprise compression stiffening means which act upon the compliant structure through part of the range of compliant movement under compression of the mount.

Preferably, the compliant structure is compliant under compression and under tension, and the stiffening means comprise tension stiffening means which act upon the compliant structure through part of the range of compliant movement under tension of the mount.

Preferably, the mount is provided with both compression stiffening means which act upon the compliant structure through part of the range of compliant movement of the mount under compression of the mount, and tension stiffening means which act upon the compliant structure through part of the range of compliant movement of the mount under tension.

Preferably, the range of compliant movement governed only by the stiffness value of the mount corresponds is sized to accommodate the normal operation loads of a gas turbine engine used with the mount.

Preferably, the range of compliant movement governed by both the first stiffness value and the stiffening means is sized to accommodate an engine blade off event of a gas turbine engine used with the mount.

Preferably, the stiffening means comprises resilient means in the form of a Belleville washer.

Preferably, the mount comprises displacement limiting means, wherein the resilient means are located adjacent the displacement limiting means. In particular, the displacement limiting means comprises a bolt, and the stiffening means are located coaxial about the bolt.

The invention will now be described in further detail with reference to the accompanying drawings in which;

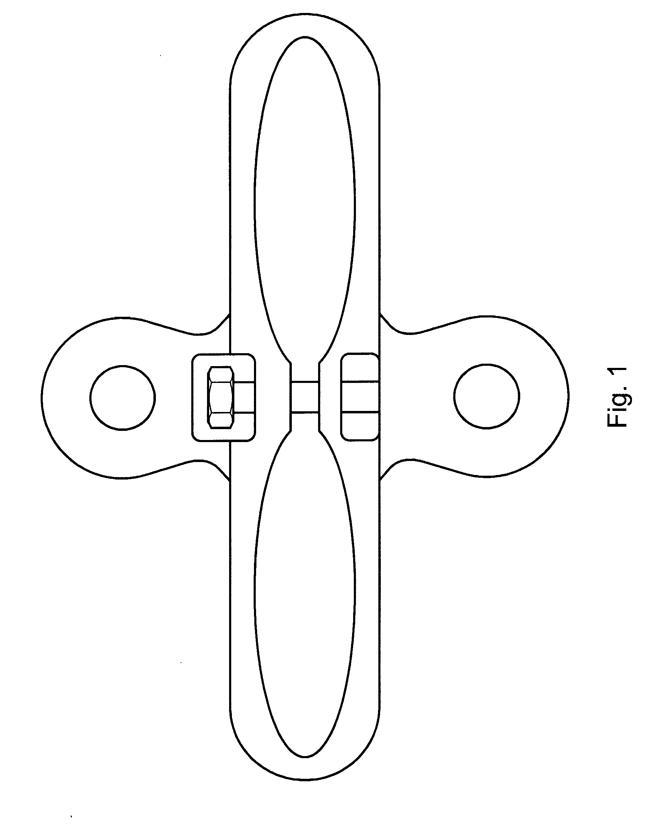

Figure 1 shows an engine mount according to the prior art;

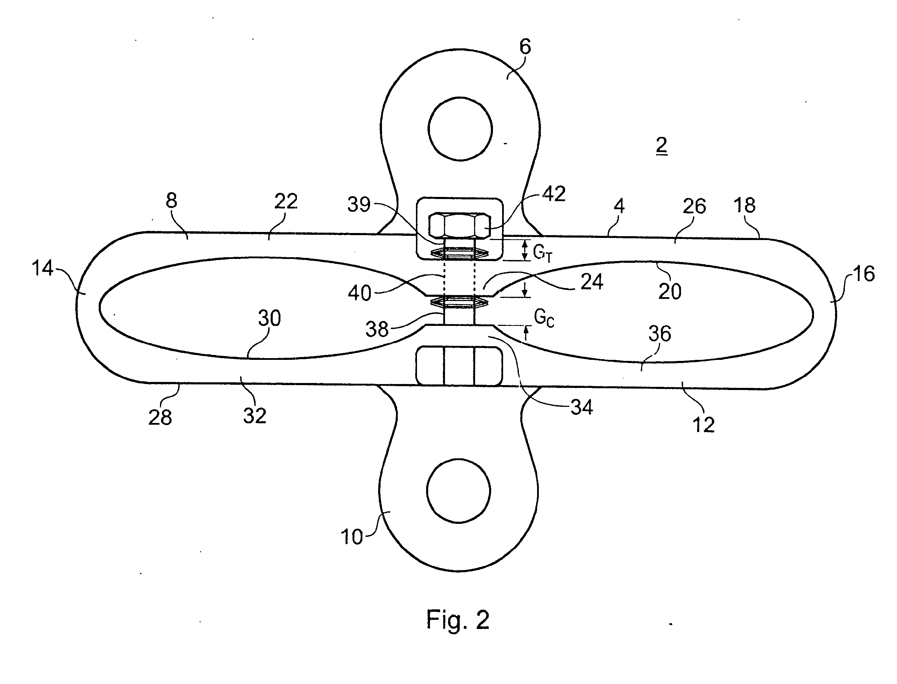

Figure 2 shows an engine mount according to the present invention; and
Figure 3 shows a part of the engine mount in more detail for clarity.

Turning to the second drawing, there is shown an engine mount 2 according to the present invention. It is one of a pair of mounts, located at the five o'clock and seven o'clock positions relative to the engine casing (not shown), towards the rear of the engine.

The mount comprises a first structure 4 in the form of a load bearing spring link. The link comprises an engine attachment point 6 located at the mid-span of a flexible first beam 8, and an aircraft attachment point 10 located at the mid-span of a flexible second beam 12. The first and second beam 8,12 lie parallel one another, joined at their first and second ends 14,16. The beams are shaped such that an elongate hoop is formed, the major axis of which lies parallel with the first and second beam 8,12. The minor axis of the hoop passes through the engine attachment point 6 and airframe attachment point 10, which lay opposite one another.

The thickness of the first and second beam 8,12 varies along their lengths. The first beam 8 has a substantially flat upper surface 18, while the lower surface 20 is relieved such that the beam 8 tapers from the first end 14, to a thin 'neck' section 22 midway between the first end and the mid-span. The section then increases, to a boss 24 at the mid-span point of the beam 8, adjacent the engine attachment point 6. The first beam 8 is symmetric about this boss 24 such that it then tapers towards a thin neck 26 section midway between the boss 24 and the second end 16 before again increasing towards the second end 16 thickness, which is the same as that of the first end.

The second beam 12 is a mirror image of the first beam 8, reflected in the major axis of the mount 2 and has a substantially flat lower surface 28, while the upper surface 30 is relieved such that the beam tapers from the first end 14, to a thin 'neck' section 32 midway between the first end 14and the mid span. The section then increases, to a boss 34 at the mid-span point, adjacent the aircraft attachment point 10. The beam 12 is symmetric about this boss 34 such that it tapers towards a thin neck section 26 midway between the boss 34 and the beam end 16 and then increases in thickness towards the second end 16.

Flex at the neck regions 22,26,32,36, and bending of the first and second beams 8,12 allows compliant movement of the engine attachment point 6 relative to the airframe attachment point 10, governed by stiffness characteristic K1.

An upstanding bolt 38 projects from the mid-span boss 34 of the second beam, coaxial with the minor axis of the engine mount 2. The shaft 39 of this bolt projects through a hole 40 in the first beam 8, sized to allow sliding movement therebetween. This arrangement constrains relative movement between first and second beam 8,12 to motion parallel to the minor axis of the mount. Relative movement in the major axis is prevented by interference between the bolt shaft 39 and hole 40, as well as the lateral stiffness of the engine mount 2.

With the mount at rest, the head 44 of the bolt is spaced apart from the outer surface 18 of the first beam 8, which is locally relieved, to define a tension clearance gap G_{T} between the bolt head 44 and the beam upper surface 18. This sets the maximum displacement of the mid-point of the first beam 8 away from the mid point of the second beam 12. When the beams are at maximum displacement, the head of the bolt 44 abuts the outer surface of the first beam 8 to prevent further displacement.

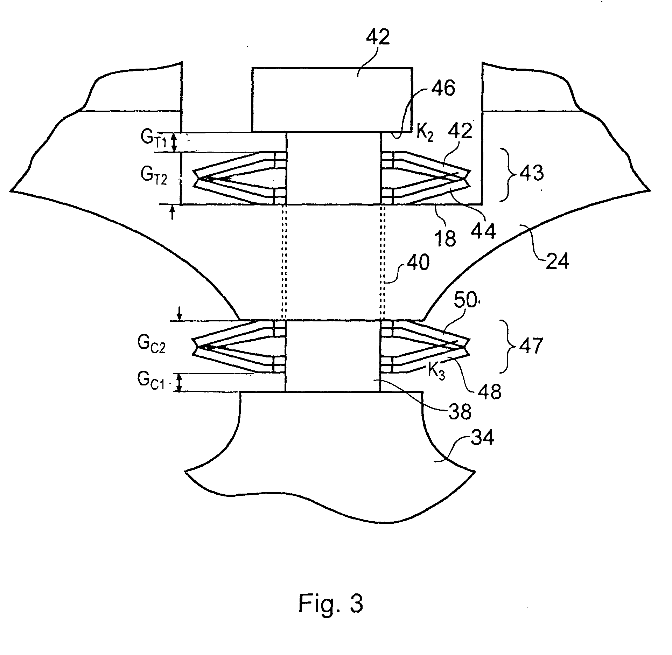

Similarly, the mid-span bosses 24,34 of each beam are spaced apart, at rest, to define a compression clearance gap G_{C} between mid-span bosses 24,34 that limits the amount by which the beams can move towards one another under compression of the mount. The bolt 38 and bosses 24,34 which form the displacement limiting means of the mount 2, will be seen in more detail if reference is now made to Figure 3.

Hence the spring mount provides a range of compliant movement between the engine and airframe, from full extension to full compression of G_{C} + G_{T}. Throughout this range of movement, a conventional spring mount has a substantially constant stiffness. The mount 2 according to the present invention is provided with stiffening means 44,45, 48,50 which act upon the spring mount through only part of the range of compliant movement so that the mount has at least two stiffness values throughout its compliant range of operation. In the present embodiment, compression stiffening means are provided to stiffen the mount 2 in compression and tension stiffening means to stiffen the mount 2 in extension, for displacements beyond the normal operating range of the link.

The tension stiffening means 43 comprises a stack of opposed Belleville washers 44,45, with stiffness characteristic K2, located coaxial about the bolt 38, and fixed to the upper surface of the first beam 8, between the beam 8 and the lower surface 46 of the bolt head. The stack is shorter than clearance gap G_{T} between bolt head and beam to divide the gap into a first 'unsprung gap' G_{T1} and a second 'sprung gap' G_{T2}. Unsprung gap G_{T1} allows a limited amount of compliant movement under tension wherein the stiffening means 43 does not engage the bolt head. For this range of movement, the displacement is governed only by the stiffness value K1 of the spring link. Beyond this tensile displacement however, the stiffening means 43 engages the bolt head so that further movement is governed by stiffness value K1 + K2.

Similarly, the compression stiffening means 47 comprises a stack of opposed Belleville washers 48,50, with stiffness characteristic K3, located coaxial about the bolt 38, and fixed to the lower surface 20 of the first beam on the mid-span boss 24. The stack 48,50 is shorter than the gap G_{C} between first and second bosses 24,34 so that the gap is divided into an 'unsprung gap' G_{C1} and a 'sprung gap' G_{C2}. Unsprung gap G_{C1} allows a limited amount of compliant movement when the mount is compressed over which the stiffening means 47 does not engage the second boss 34. Hence this range of displacement is governed only by the stiffness value K1 of the spring link. Beyond this compressive displacement however, the stiffening means 47 engages the second boss 34 so that any further movement is governed by stiffness value K1 + K3.

During normal operation of the gas turbine engine, vibration of the engine is accommodated by vertical flex of the engine mount 2 i.e. by relative movement between the engine attachment point 6 and the aircraft attachment point 10 through flexing of the first and second beams 8,12 of the engine mount 2. The stiffness K1 of the mount 2, and the clearance unpsrung gaps G_{C1}, G_{T1} are selected such that the range of displacement of the first beam 8 relative to the second beam 12 does not exceed unpsrung gap G_{C1} in compression, or unpsrung gap G_{T1} in tension under normal operating loads, ie those imposed by the engine during normal engine operation in straight and level flight. This isolates engine noise from the aircraft.

In the event of an engine blade off event loads imposed by the engine exceed these normal operation loads. Where the mount is placed under such a load in tension, it is extended beyond tension unsprung gap G_{T1}. Tension stiffening means 43 then comes into play to stiffen the mount sufficiently that the loads are accommodated within the compliant range of extension of the mount 2, ie within sprung gap G_{T2}. Where the mount 2 is placed under such a load in compression, it is compressed beyond compression unpsrung gap GC1. Compression stiffening means 47 then comes into play to stiffen the mount sufficiently that the loads are accommodated within the compliant range of compression of the mount 2 ie within compression sprung gap G_{C2}.

When the tension stiffening means 43 are engaged, or when the compression stiffening means 47 are engaged, the effective stiffness characteristic of the engine mount is increased to K1+K2, or K1+K3 respectively. This restricts the displacement of the first and second beams relative one another at the extremes of compression and tension of the mount. In this way, the mount is provided with two modes of operation, a first optimised for the cruise condition, with stiffness value K1 set to govern the relative displacement of the mount over the range of movement G_{T1} + G_{C1}, and a second mode optimised for the engine blade-off condition where relative displacement of the mount outside of the cruise range, G_{T2} and G_{C2} is governed by, respectively K1+K2 and K1+K3. This avoids the need to oversize an engine mount to accommodate the excessive range of relative displacement necessitated by a single stiffness value set for cruise, at the blade-off condition, or the need to use a over-stiff spring mount for the cruise, so that the stiffness is suited to the blade-off condition.

It will be understood that this description is not intended to limit the scope of the present invention to only the mount arrangement described. It will be understood by the person skilled in the art that a number of configurations are possible wherein a flexible mount is provided with resilient means that increase the effective stiffness of the structure beyond a predetermined displacement.

Similarly, the stiffening means used to increase the effective stiffness of the mount are not limited to Belleville washers. A number of stiffening means may be used to provide the stiffening effect, such as coil springs, air springs, or elastomers.

Similarly, it will be understood that it may be advantageous to configure the stiffening means, Belleville washers in the present embodiment, such that a rising rate is provided wherein the value of K increases proportionally with the displacement of the mount, for example by the use of a stack of washers, each of which has a different stiffness to create a spring whose stiffness increases with displacement. Similarly, a gas spring can be used, which has a natural rising rate.

Although the figures show only a monolithic load bearing spring link, it will be understood that the link may be assembled from a number of separate components.

## Claims

1. An engine mount for a gas turbine comprising a first compliant structure having a range of compliant movement governed by a first stiffness value, further comprising stiffening means which act upon the compliant structure through part of the range of compliant movement such that the mount has at least two modes of operation, a first mode governed only by the first stiffness value of the compliant structure, and a second mode governed by both the first stiffness value and the stiffening means.

2. An engine mount as claimed in claim 1 wherein the compliant structure is compliant under compression and under tension, and wherein the stiffening means comprise compression stiffening means which act upon the compliant structure through part of the range of compliant movement under compression of the mount.

3. An engine mount as claimed in claim 1 wherein the compliant structure is compliant under compression and under tension, and wherein the stiffening means comprise tension stiffening means which act upon the compliant structure through part of the range of compliant movement under tension of the mount.

4. An engine mount as claimed in claim 2 and claim 3 wherein the mount is provided with compression stiffening means which act upon the compliant structure through part of the range of compliant movement of the mount under compression of the mount, and tension stiffening means which act upon the compliant structure through part of the range of compliant movement of the mount under tension.

5. An engine mount as claimed in claim 1 wherein the range of compliant movement governed only by the stiffness value of the mount is sized to accommodate the normal operation loads of a gas turbine engine used with the mount.

6. An engine mount as claimed in claim 1 wherein the range of compliant movement governed by both the first stiffness value and the stiffening means is sized to accommodate the loads imposed by an engine blade off event in a gas turbine engine used with the mount.

7. An engine mount as claimed in claim 1 wherein the stiffening means comprises resilient means.

8. An engine mount as claimed in claim 7 wherein the resilient means comprises a Belleville washer.

9. An engine mount as claimed in claim 1 wherein the mount comprises displacement limiting means, wherein the resilient means are located adjacent the displacement limiting means.

10. An engine mount as claimed in claim 1 wherein the displacement limiting means comprises a bolt, and wherein the stiffening means are located coaxial about the bolt.
